Europäisches Patentamt

European Patent Office

Office européen des brevets

(19)

(11) Veröffentlichungsnummer: **0 150 081**
**A2**

(12) **EUROPÄISCHE PATENTANMELDUNG**

(21) Anmeldenummer: **85200043.9**

(22) Anmeldetag: **18.01.85**

(51) Int. Cl.⁴: **H 01 M 10/54**
**H 01 M 6/52, C 22 B 7/00**

(30) Priorität: **24.01.84 DE 3402196**

(43) Veröffentlichungstag der Anmeldung:
**31.07.85 Patentblatt 85/31**

(84) Benannte Vertragsstaaten:
**AT BE CH DE FR GB IT LI LU NL SE**

(71) Anmelder: **METALLGESELLSCHAFT AG**
**Reuterweg 14 Postfach 3724**
**D-6000 Frankfurt/M.1(DE)**

(72) Erfinder: **Koch, Walter**
**Dürerstrasse 7**
**D-6052 Mühlheim(DE)**

(72) Erfinder: **Türke, Wolfgang**
**Martin-Luther-Ring 4**
**D-6369 Schöneck(DE)**

(72) Erfinder: **Pietsch, Hartmut, Dr.**
**Feldbergstrasse 42**
**D-6380 Bad Homburg(DE)**

(74) Vertreter: **Fischer, Ernst, Dr.**
**c/o Metallgesellschaft AG Reuterweg 14**
**D-6000 Frankfurt am Main 1(DE)**

(54) Verfahren zur Aufarbeitung von Klein-Batterien.

(57) Klein-Batterien werden nach einer mechanischen Zertrümmerung unter Zusatz eines Magerungsmittels und festen Chlorides bei Temperaturen von 580 bis 700 °C chlorierend geröstet. Aus dem Abgas wird das verflüchtigte Quecksilber ausgewaschen. Das Röstprodukt wird mit verdünnter Salzsäure enthaltender wäßriger Lösung gelaugt. Aus der Lösung werden NE-Metalle durch Zinkzugabe ausgefällt.

Die Zink enthaltende Lösung und die NE-Metalle enthaltenden Produkte werden aufgearbeitet.

EP 0 150 081 A2

METALLGESELLSCHAFT AG          20.01.1984
Reuterweg 14                   SCHR/OKU/LWÜ

6000 Frankfurt/Main 1


Prov.Nr. 9112 LC


Verfahren zur Aufarbeitung von Klein-Batterien


Die Erfindung betrifft ein Verfahren zur Aufarbeitung von
Klein-Batterien.


Unter dem Begriff "Klein-Batterien" werden alle Arten kleiner Batterien verstanden, wie sie z.B. für Radios, Taschenrechner, Taschenlampen, Uhren, Hörgeräte usw. verwendet
werden. Ausgeschlossen sind große Akkus, wie sie z.B. für
Autos verwendet werden.


Diese Batterien enthalten metallische Bestandteile, wie z.B.
Fe, Ni, Cu, Ag, Hg, Cd, aber auch chemische Verbindungen,
wie z.B. Salze des Mangans oder Zinks. Darüber hinaus sind
gewisse Anteile an Papier und Plastikstoffen enthalten.


Bis vor einiger Zeit wurden die verbrauchten Batterien ausschließlich mit dem normalen Hausmüll deponiert oder verbrannt. Dadurch treten jedoch Umweltverunreinigungen auf.


In neuerer Zeit werden diese Batterien teilweise gesondert
gesammelt. Ihre Vernichtung in umweltfreundlicher Weise ergibt jedoch große Schwierigkeiten.


Der Erfindung liegt die Aufgabe zugrunde, diese Batterien
in möglichst wirtschaftlicher und umweltfreundlicher Weise
zu beseitigen und dabei mindestens einen großen Teil der
NE-Metalle wiederzugewinnen.

Die Lösung dieser Aufgabe erfolgt erfindungsgemäß dadurch, daß durch mechanische Zertrümmerung mindestens die Gehäuse der Batterien aufgebrochen werden, die zertrümmerten Batterien mit festen, chemisch wenig aktiven Magerungsmitteln und Chloride enthaltenden Feststoffen gemischt werden, die Mischung bei Temperaturen von 580 - 700 $^{o}$C chlorierend geröstet wird, das Abgas der chlorierenden Röstung einer Gaswäsche zur Auswaschung von Quecksilber, Salzsäure und gegebenenfalls $SO_2$ unterworfen wird, der feste Rückstand der chlorierenden Röstung mit verdünnte Salzsäure enthaltender wäßriger Lösung gelaugt wird, die Lösung vom unlöslichen Rückstand abgetrennt wird, aus der Lösung durch Zugabe von metallischem Zink die Kupfer- und Edelmetalle auszementiert werden, und die das Zink enthaltende Lösung verarbeitet wird.

Die Zertrümmerung der Batterien muß auf jeden Fall so weit erfolgen, daß die Gehäuse der Batterien aufgebrochen und damit geöffnet werden. Eine gleichzeitige Zerkleinerung der Batterien ist von Vorteil für die weitere Verarbeitung. Die Zertrümmerung kann in bekannten Apparaten, z.B. in einer Hammermühle, erfolgen. Als Magerungsmittel kann jeder Feststoff verwendet werden, der chemisch gesehen inert oder wenig aktiv im weiteren Behandlungsgang reagiert. Als Magerungsmittel können z.B. Sand, Kiesabbrand und ein Teil des festen Rückstandes nach der Laugung verwendet werden. Im allgemeinen wird NaCl als Chloride enthaltender Feststoff der Mischung zugesetzt. Die chlorierende Röstung kann in bekannten Apparaten erfolgen. Die erforderliche Temperatur wird durch Einleiten von heißen Gasen, z.B. Rauchgasen, erzielt. Bei der Röstung wird gleichzeitig der Gehalt an Papier und Plastik vollständig verbrannt. Das Abgas wird einer Wäsche unterworfen, wobei der Quecksilbergehalt, Salzsäuregehalt und eventuell vorhandenes $SO_2$ ausgewaschen werden. Die Quecksilber-Abtrennung von der Waschflüssigkeit kann nach bekannten Methoden erfolgen.

Die Konzentration und Menge der Salzsäure enthaltenden
Lösung für die Laugung richtet sich nach Art und Gehalt
des Rückstandes der chlorierenden Röstung an säureverbrauchenden Bestandteilen. Bei der chlorierenden Röstung werden der Eisen- und Mangangehalt in Oxide überführt, die bei
der Laugung nicht löslich sind und im Rückstand verbleiben.
Die NE-Metalle, insbesondere Cu, Zn, Ag, Cd, werden bei der
chlorierenden Röstung fast vollständig in lösliche Verbindungen überführt, die bei der Laugung in Lösung gehen. Die
Zementation mit metallischem Zink erfolgt im allgemeinen
durch Zugabe von feinkörnigem Zinkstaub. Die bei der Zementation ausgefällten NE-Metalle können nach bekannten
Methoden wiedergewonnen werden. Die verbleibende, Zn-haltige
Lösung kann zur Herstellung von Zinksalzen verwendet werden.

Eine vorzugsweise Ausgestaltung besteht darin, daß ein Teil
zertrümmerte Batterien mit zwei bis drei Teilen Magerungsmittel gemischt werden. Dadurch werden gute Verhältnisse
bei der Röstung erzielt. Eine vorzugsweise Ausgestaltung
besteht darin, daß die Chloride enthaltenden Feststoffe
in einer Menge von 5 - 20 %, bezogen auf die Mischung von
Magerungsmittel und zertrümmerten Batterien, zugesetzt
werden. Dieser Zusatz ergibt eine gute Chlorierung bei der
Röstung.

Eine vorzugsweise Ausgestaltung besteht darin, daß die
chlorierende Röstung über 3 bis 5 Stunden durchgeführt
wird. Dadurch wird eine weitgehende Chlorierung bei der
Röstung erzielt.

Eine vorzugsweise Ausgestaltung besteht darin, daß die
chlorierende Röstung in einem Etagenofen durchgeführt wird.
Im Etagenofen wird eine gute Chlorierung erzielt, es
liegen gute Betriebsbedingungen vor und der Ofen kann gut
abgedichtet werden.

Eine vorzugsweise Ausgestaltung besteht darin, daß bei
der Gaswäsche des Abgases der chlorierenden Röstung
anfallendes saures Waschwasser zur Laugung verwendet wird.
Das saure Waschwasser enthält als Säure vorwiegend Salzsäure. Wenn bei der Röstung $SO_2$ entwickelt wird, enthält
es auch Schwefelsäure bzw. schwefelige Säure. Durch die
Verwendung in der Laugung werden Abwasserprobleme vermieden und die Laugung wird billiger.

Eine vorzugsweise Ausgestaltung besteht darin, daß die
Laugung unter oxidierenden Bedingungen und erhöhten
Chloridgehalten der Laugungslösung erfolgt. Dadurch wird
eine Ausfällung von Silber und Gold vermieden, die z.B.
durch vorhandenes $Fe^{2+}$ erfolgen könnte. Der Chloridgehalt
der Lösung wird auf etwa 50 - 150 g/l Chlor eingestellt.

Die Vorteile der Erfindung bestehen darin, daß die Batterien ohne umweltschädliche Nebenprodukte aufgearbeitet
werden können und gleichzeitig ein sehr beträchtlicher Teil
der NE-Metalle wiedergewonnen werden kann.

Patentansprüche

1. Verfahren zur Aufarbeitung von Klein-Batterien, dadurch gekennzeichnet, daß durch mechanische Zertrümmerung mindestens die Gehäuse der Batterien aufgebrochen werden, die zertrümmerten Batterien mit festen, chemisch wenig aktiven Magerungsmitteln und Chloride enthaltenden Feststoffen gemischt werden, die Mischung bei Temperaturen von 580 - 700 °C chlorierend geröstet wird, das Abgas der chlorierenden Röstung einer Gaswäsche zur Auswaschung von Quecksilber, Salzsäure und gegebenenfalls $SO_2$ unterworfen wird, der feste Rückstand der chlorierenden Röstung mit verdünnter Salzsäure enthaltender wäßriger Lösung gelaugt wird, die Lösung vom unlöslichen Rückstand abgetrennt wird, aus der Lösung durch Zugabe von metallischem Zink die Kupfer- und Edelmetalle auszementiert werden, und die das Zink enthaltende Lösung verarbeitet wird.

2. Verfahren nach Anspruch 1, dadurch gekennzeichnet, daß ein Teil zertrümmerte Batterien mit zwei bis drei Teilen Magerungsmittel gemischt werden.

3. Verfahren nach Anspruch 1 oder 2, dadurch gekennzeichnet, daß die Chloride enthaltenden Feststoffe in einer Menge von 5 - 20 %, bezogen auf die Mischung von Magerungsmittel und zertrümmerten Batterien, zugesetzt werden.

4. Verfahren nach einem der Ansprüche 1 bis 3, dadurch gekennzeichnet, daß die chlorierende Röstung über 3 bis 5 Stunden durchgeführt wird.

5. Verfahren nach einem der Ansprüche 1 bis 4, dadurch gekennzeichnet, daß die chlorierende Röstung in einem Etagenofen durchgeführt wird.

6. Verfahren nach einem der Ansprüche 1 bis 5, <u>dadurch</u> <u>gekennzeichnet</u>, daß bei der Gaswäsche des Abgases der chlorierenden Röstung anfallendes saures Waschwasser zur Laugung verwendet wird.

7. Verfahren nach einem der Ansprüche 1 bis 6, <u>dadurch</u> <u>gekennzeichnet</u>, daß die Laugung unter oxidierenden Bedingungen und erhöhten Chloridgehalten der Laugungslösung erfolgt.